# EUROPEAN PATENT SPECIFICATION

(11) **EP 3 591 820 B1**
(45) Date of publication and mention of the grant of the patent: **01.09.2021**
(21) Application number: 18181659.6
(22) Date of filing: 04.07.2018
(51) Int. Cl.: H02M 1/32, H02M 1/36, H02H 7/12, H02H 3/06

(54) **METHOD FOR CONTROLLING A GRID-FORMING CONVERTER, COMPUTER PROGRAM AND GRID-FORMING CONVERTER**
VERFAHREN ZUR STEUERUNG EINES NETZBILDENDEN UMRICHTERS, COMPUTERPROGRAMM UND NETZBILDENDER UMRICHTER
PROCÉDÉ POUR COMMANDER UN CONVERTISSEUR DE FORMATION DE RÉSEAU, PROGRAMME INFORMATIQUE ET CONVERTISSEUR DE FORMATION DE RÉSEAU

(43) Date of publication of application: 08.01.2020
(73) Proprietor: Christian-Albrechts-Universität zu Kiel, 24118 Kiel (DE)
(72) Inventor: DE CARNE, Giovanni, 24106 Kiel (DE); LISERRE, Marco, 24248 Mönkeberg (DE); RONGWU, Zhu, 24106 Kiel (DE)
(74) Representative: Gramm, Lins & Partner Patent- und Rechtsanwälte PartGmbB

(56) References cited:
- EP-A1- 3 118 982
- US-A1- 2008 084 643
- US-A1- 2016 248 246

## Description

The invention relates to a method for controlling a grid-forming converter, the converter comprising semiconductor switches and a control unit which controls the semiconductor switches. The invention further relates to a computer program for computer controlled execution of such a method and a grid-forming converter which is arranged for executing such a method.

Generally speaking, the invention relates to the use of the technology of converters in the form of grid-forming converters that shape the voltage waveform in the electrical grid. An example of such grid-forming converter are the Smart Transformers (ST), which are also called Solid State Transformers, Power Electronics Transformers or Intelligent Universal Transformers. Such converters make use of electronic control, in particular software or other kind of logic control, for controlling a plurality of semiconductor switches which are switched in a manner such that a desired energy transfer from a primary side of the converter to a secondary side of the converter or in the opposite direction can be achieved.

In EP 3 118 982 A1 a fault ride through method in a marine power distribution system is disclosed.

Faults in such converters are difficult to handle, due to the low overload capability of the ST. On one side, the low voltage side converter of ST can protect itself by blocking rapidly the semiconductor switches when its current is higher than a threshold value, avoiding the semiconductors destruction, but, on the other side, it loses the vertical selectivity of the fault protection relays (grid-breakers) in the downstream grid. Indeed, in case of a fault in the ST-fed grid, the ST may be the first one to intervene, due to the low ampacity of its converter, with respect to the breaker intervention characteristics, that have higher current intervention thresholds.

It is an object of the invention to improve this situation.

The object of the invention is achieved by a method according to claim 1. The method includes controlling a grid-forming converter, the converter comprising semiconductor switches and a control unit which controls the semiconductor switches, the method comprising at least the following steps:
a) detecting a fault in the converter or in the grid connected to the converter, which fault may lead to a malfunction of the converter,
b) changing an actual operating mode of the control unit into a fault operating mode for controlling the semiconductor switches, which protects the converter from the malfunction and at the same time maintains the selectivity grid-breakers in the grid.

Such grid-forming converters control the voltage in the fed grid, e.g. in the grid connected to the primary side or the secondary side of the converter. In case of grid fault the converter can protect itself by blocking the semiconductor-based switching elements. However, the response of the converter may result faster than the reaction of any breaker relay in the grid, resulting in the loss of grid-breaker selectivity in the distribution grid. The converter may interrupt the short circuit current before the breaker in charge of breaking the current, thus interrupting the power supply to the whole distribution network. The proposed protection method allows to protect grid forming converter and at the same time to respect the grid breakers selectivity.

Therefore, since the selectivity of the grid-breakers is maintained by the invention, in other words, the proposed method allows to respect the grid-breakers selectivity. This allows to integrate a grid-forming converter without any changes in the protection systems of existing electrical distribution grids. For maintaining the selectivity grid-breakers in the grid, for example, the converter may by further operated, while the fault is present, until a grid-breaker in a grid connected to the converter triggers.

The malfunction of the converter may be a destruction of one or more of its semiconductor switches due to high short circuit currents. The proposed approach uses the fast controllability of the converter to provide fast fault clearing and safety to the converter switching circuit.

According to the invention, in fault operating mode the converter blocks as first reaction the semiconductor switches of the phase or phases involved in the fault. This protects the elements of the converter. The blocking of the semiconductor switches can be done, for example, by switching off the semiconductor switches.

According to the invention, in fault operating mode the converter waits for a short transient which allows to dissipate the fault-caused transient energy from the semiconductor switches and then gradually increases the output voltage provided by the semiconductor switches in the fed grid. The short transient can be, for example, in the area of a few microseconds or it may reach to several cycles of the grid voltage. The gradual increase of the output voltage can be applied continuously or stepwise, or such increase functions could be mixed.

According to the invention, a voltage gradient is applied for gradually increasing the output voltage. The voltage gradient can be a non-linear gradient, for example an exponential function.

According to an advantageous embodiment, the voltage gradient is a linear ramp. This allows for soft and smooth recovery of the output voltage.

According to an advantageous embodiment, the gradually increasing of the output voltage is done from a starting voltage, e.g. zero Volt, to a target voltage, e.g. the nominal voltage of the grid.

According to an advantageous embodiment, upon at least one trigger condition the controller starts to switch the semiconductors in order to create a squared waveform of the output voltage of the converter. Using such square-wave mode instead of usual sinusoidal voltage waveform, the converter is able to provide the full short circuit current (at nominal voltage) using a square-based voltage waveform. It minimizes the switching losses, maintaining the semiconductor temperature below the maximum one. In the square-wave mode the switching frequency of the semiconductor switches of the converter can be significantly lower than in sinusoidal mode. For example, in square-wave mode the switching frequency may be the nominal grid frequency of the grid fed by the converter (e.g. 50 Hz).

According to an advantageous embodiment, the controller evaluates whether the fault is close to the converter and/or the closest breaker has an intervention current higher than the converter ampacity, if one or both of these conditions is fulfilled then the controller starts to switch the semiconductors in order to create a squared waveform of the output voltage of the converter. Therefore, if the fault is close to the converter, a trigger condition for starting the square-wave mode is given. If the closest breaker has an intervention current higher than the converter ampacity, another trigger condition for starting the square-wave mode is given. The controller can get information about the position of the closest breaker and/or of the converter ampacity, for example, by storing such parameters in a memory of the control unit. The squared waveform of the output voltage helps that the converter can withstand higher overload, due to the reduced switching losses of the semiconductors. The term "ampacity" means the nominal maximum current of the grid-forming converter or a specific phase of the converter.

The object of the invention is further achieved by a computer program with instructions executable on a computer for computer controlled execution of a method of the aforementioned kind. By such computer program the same advantages can be achieved as mentioned above.

The object is further achieved by a grid-forming converter having a primary side to be connected to a primary grid and a secondary side to be connected to a secondary grid, the converter comprising semiconductor switches and a control unit which controls the semiconductor switches for converting electrical energy from the primary grid to the secondary grid and/or from the secondary grid to the primary grid, wherein the control unit is arranged for executing a method of the aforementioned kind. By such converter the same advantages can be achieved as mentioned above.

According to an advantageous embodiment, no ferroresonant circuit is connected in parallel to the converter. Such ferroresonant circuit may be used in other applications, for example uninterruptable power supplies, for providing an external short-circuit path to the converter, which allows for injecting higher currents than the converter would be able to inject. However, as a result of the avoidance of a ferroresonant circuit, in the present invention electrical parts can be saved and the complete grid can be realized with less efforts.

According to an advantageous embodiment, the control unit comprises a computer and/or logic circuitry for executing the method of the aforementioned kind. The computer maybe a microprocessor, microcontroller or similar unit which is able to execute a software program. The logic circuit maybe a FPGA.

According to an advantageous embodiment,
a) the primary grid is a high voltage grid and the secondary grid is a medium voltage (MV) grid or
b) the primary grid is a medium voltage grid and the secondary grid is a low voltage (LV) grid.

Advantageous applications of the invention are any LV and MV distribution grid, where a ST is integrated, as well as islanded grids and microgrids.

In a nutshell, the technology proposed in this patent allows to protect the converter from overloading during short circuits, and at the same time to respect the vertical selectivity of breakers in the grid. If a fault occurs, the converter blocks as first the semiconductors of the phases involved in the fault. Then, it waits for a short transient (variable from few microseconds to several fundamental cycles) in order to let dissipate the fault transient energy and following applies a voltage ramp up to the nominal voltage, that can take several hundreds milliseconds. The fault can be considered as an impedance to ground or to neutral conductor or to another phase, thus, when the voltage increases, the current increases together. The breakers in the grid are set in order to create a vertical selectivity. Only the breaker near the fault is called to intervene, and if it fails, the upper level breaker intervenes. However, the upper level breaker will intervene for higher current than the lower level one, in order to avoid false trips and because its nominal current is higher. Increasing the voltage linearly, the current increase linearly too, forcing to open before the breaker with the lowest current rating in the fault path. If the fault is near the converter, and the responsible breaker has an intervention current higher than the converter converter ampacity, the converter semiconductors may begin to impose a voltage squared waveform, that enables to withstand higher overload, due to the reduced switching losses.

Advantages in bullet points:
- Minimization of the fault transient, with the clearance of it in few hundreds of milliseconds.
- Perfect integration of STs in the current distribution grid, respecting the existing vertical selectivity of the protection system.
- The converter can work on single-phase base, opening only the faulty-phase, leaving in operation the other two phases.
- With the proposed method, the impact of the short circuit current from rotating machines present in the grid is minimized, due to the reduced voltage needed for letting the breakers trip.
- The ST is able to provide the full short circuit current in case of high breaker intervention current rating.

The invention is now described by examples, using the following figures:
Fig. 1 - voltage and current profile over time of a first embodiment and
Fig. 2 - voltage and current profile over time of a second embodiment and
Fig. 3 - square-wave modulation of output voltage and
Fig. 4 - a converter connected to a medium voltage and a low voltage grid.

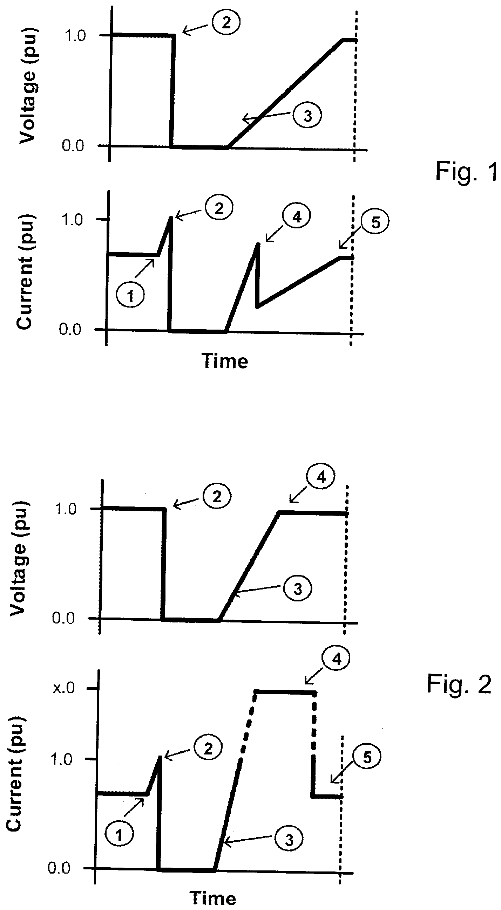

A first embodiment of the approach proposed in this patent is shown in Fig.1.

### Point 1:

A fault occurs in any of the grid phases. This approach can work in single-phase or three-phase mode. In reaction to the fault, the current rises.

### Point 2:

The current reaches a maximum threshold, e.g. defined by the manufacturer of the converter to protect the converter hardware. The converter semiconductor switches involved in the grid faults trip, isolating each phase under fault. The voltage is dropped instantaneously to zero, due to the opening of the circuit (switches open).

### Point 3:

The converter keeps the semiconductor switches open for a certain period that can vary from one sampling time (e.g., few microseconds) to several fundamental cycles (e.g., 40-60 ms), in order to dissipate the fault energy initially accumulated. At point 3, the converter begins to apply a voltage ramp, that can reach the steady state in the order of hundreds of milliseconds (e.g., 200-400ms), depending on the connection rule of loads and generators. The current begins to increase.

### Point 4:

The increase of the current leads all breakers involved in the faulty path to measure an increase in the current. The breaker that first opens is the one nearest the fault, due to the smaller intervention current. Applying the voltage ramp or any other smooth transition allows to respect the vertical selectivity, because the higher level breakers will trigger later than the one nearest the fault. When the breaker opens at point 4, the current drops due to the clearing of the fault, and it continues to increase together with the voltage increase.

### Point 5:

At point 5 the normal conditions are restored, with nominal voltage. The current depends solely by the load demand, because the fault is cleared

The aforementioned converter protection works best if the intervention current of the breakers is below the converter rating (or converter ampacity). However, Fig. 2 shows a second embodiment of the approach proposed in this patent which is optimized if a higher current is requested for letting the breaker trip.

The embodiment of figure 2 is the same as the embodiment of figure 1 from the beginning until point 3 is reached. At point 3 the converter begins to apply the voltage increase function. In this operating phase, the converter may output a squared waveform of the output voltage, as further described hereinafter. The converter may instantly, at point 3, switch to square-wave mode, or it may begin with normal sinusoidal voltage waveform and then, when a certain voltage or current is reached, change to a square-wave mode.

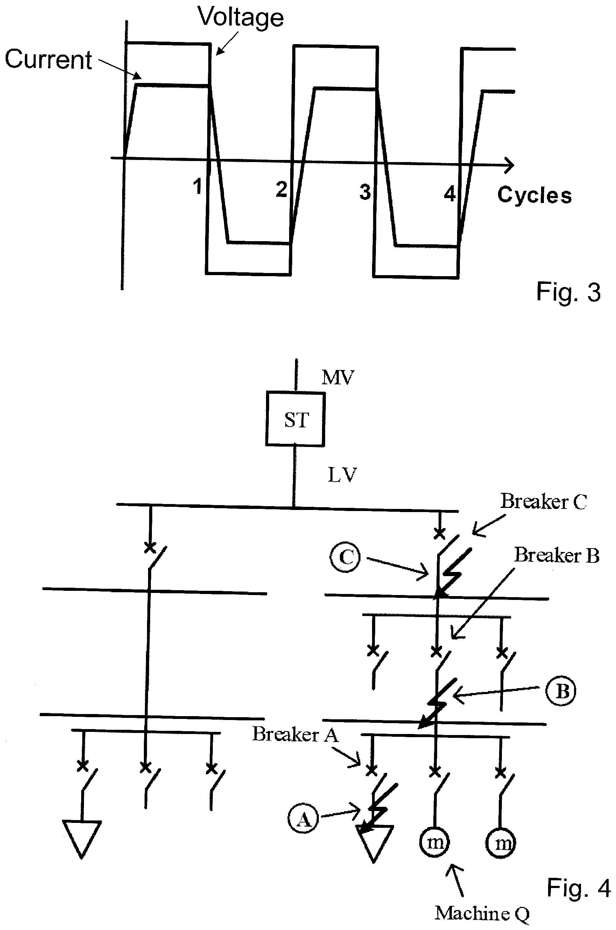

If a higher current is requested for letting the breaker trip, the converter has to provide that current in order to avoid the permanence of the fault or long disconnection time, due to the intervention of the thermal curve of the breaker. To provide the full short circuit current, the converter applies the nominal voltage, and, as soon as the maximum allowable current is reached, the converter begins to work in square-wave mode. It imposes a squared voltage waveform at nominal frequency, as shown in Fig. 3, that allows to minimize the switching losses (and thus the semiconductor temperature), and thus to inject the full short circuit current, although for a short amount of time. In this way, the breaker can sense a current higher than its intervention current limit, and open the faulty phase. As soon as the fault is cleared, the current goes back below the converter ampacity and the converter may restore the sinusoidal voltage waveform, or may continue in square-wave mode.

### Example of operations with vertical selectivity:

Let us consider the network in Fig. 4. It is composed of a converter ST, a ST-fed grid e.g. a Low Voltage (LV) grid), and, in the first branch, of several breakers with their protection intervention currents. If a fault occurs at the end of the line (Point A), the Breaker A must intervene, because it is the nearest to the fault. The ST begins to increase the voltage after blocking the conduction immediately after the fault. The current increases and when it reaches the intervention current of Breaker A, its relay triggers the Breaker A to open. Breaker B and Breaker C do not measure a current high enough to be forced to intervene. In this case, the machine Q, present in a parallel branch, does contribute to the fault current only in limited way, due to the decreased voltage level in the grid.

In case the fault is located in point B, the Breaker A does not see the short circuit current and Breaker B must intervene. With respect to the previous case, the voltage increases more, because Breaker B has higher current rating. As soon as the Breaker B intervention current is met, its relay forces the opening of the breaker. Breaker C sees the short circuit current, but it does not intervene due to the current level that is lower the intervention one.

In case the fault is located in the point C, the Breaker C needs a short circuit current higher than the ST ampacity. Thus, the ST decides to finish the voltage ramp (or increasing the voltage enough to have the desired short circuit current) and to switch in square-wave mode. In this mode, the ST is able to inject higher current than in the sinusoidal case, because it decreases its switching losses, switching to low frequency (50 Hz) instead of several kHz.

In all the previous cases, as soon as the fault is cleared, the current is immediately reduced, following the voltage ramp.

## Claims

1. Method for controlling a grid-forming converter (ST), the converter (ST)comprising semiconductor switches and a control unit which controls the semiconductor switches, the method comprising at least the following steps:
a) detecting a fault in the converter (ST) or in the grid connected to the converter (ST), which fault may lead to a malfunction of the converter (ST),
b) changing an actual operating mode of the control unit into a fault operating mode for controlling the semiconductor switches, which protects the converter (ST) from the malfunction and at the same time maintains the selectivity grid-breakers (A, B, C) in the grid,
**characterized in that** in fault operating mode the converter (ST) blocks as first reaction the semiconductor switches of the phase or phases involved in the fault and then, after waiting for a short transient which allows to dissipate the fault-caused transient energy from the semiconductor switches, the converter (ST) applies a voltage gradient for gradually increasing the output voltage provided by the semiconductor switches.

2. Method according to claim 1, **characterized in that** the voltage gradient is a linear ramp or a non-linear ramp.

3. Method according to any of claims 1 to 2, **characterized in that** the gradually increasing of the output voltage is done from a starting voltage, e.g. zero Volt, to a target voltage, e.g. the nominal voltage of the grid.

4. Method according to any of the preceding claims, **characterized in that** upon at least one trigger condition the controller starts to switch the semiconductors in order to create a squared waveform of the output voltage of the converter (ST).

5. Method according to claim 4, **characterized in that** the controller evaluates whether the fault is close to the converter (ST) and/or the closest breaker (A, B, C) has an intervention current higher than the converter (ST) ampacity, if one or both of these conditions is fulfilled then the controller starts to switch the semiconductors in order to create a squared waveform of the output voltage of the converter (ST).

6. Computer program comprising instructions to cause the control unit of claim 1 to execute the steps of a method according to any of the preceding claims.

7. Grid-forming converter (ST) having a primary side to be connected to a primary grid (MV) and a secondary side to be connected to a secondary grid (LV), the converter (ST) comprising semiconductor switches and a control unit which controls the semiconductor switches for converting electrical energy from the primary grid to the secondary grid and/or from the secondary grid to the primary grid, wherein the control unit is arranged for executing a method according to any of claims 1 to 5.

8. Converter (ST) according to claim 7, **characterized in that** no ferroresonant circuit is connected in parallel to the converter (ST).

9. Converter (ST) according to any of claims 7 to 8, **characterized in that** the control unit comprises a computer and/or logic circuitry for executing the method according to any of claims 1 to 5.

10. Converter (ST) according to any of claims 7 to 9, **characterized in that**
a) the primary grid (MV) is a high voltage grid and the secondary grid (LV) is a medium voltage grid or
b) the primary grid (MV) is a medium voltage grid and the secondary grid (LV) is a low voltage grid.

## Patentansprüche

1. Verfahren zur Steuerung eines netzbildenden Umrichters (ST), wobei der Umrichter (ST) Halbleiterschalter und eine Steuereinheit, die die Halbleiterschalter steuert, umfasst, wobei das Verfahren mindestens die folgenden Schritte umfasst:
a) Erkennen eines Fehlers im Umrichter (ST) oder in dem an den Umrichter (ST) angeschlossenen Netz, der zu einer Fehlfunktion des Umrichters (ST) führen kann,
b) Ändern eines aktuellen Betriebsmodus der Steuereinheit in einen Fehlerbetriebsmodus zur Ansteuerung der Halbleiterschalter, der den Umrichter (ST) vor der Fehlfunktion schützt und gleichzeitig die Selektivität der Netzschalter (A, B, C) im Netz aufrechterhält,
**dadurch gekennzeichnet, dass** der Stromrichter (ST) im Fehlerbetriebsmodus als erste Reaktion die Halbleiterschalter der in den Fehler involvierten Phase(n) blockiert und dann, nach dem Abwarten einer kurzen Transiente, die es ermöglicht, die durch den Fehler verursachte Transientenenergie von den Halbleiterschaltern abzuführen, einen Spannungsgradienten anlegt, um die von den Halbleiterschaltern bereitgestellte Ausgangsspannung allmählich zu erhöhen.

2. Verfahren nach Anspruch 1, **dadurch gekennzeichnet, dass** der Spannungsgradient eine lineare Rampe oder eine nichtlineare Rampe ist.

3. Verfahren nach einem der Ansprüche 1 bis 2, **dadurch gekennzeichnet, dass** die allmähliche Erhöhung der Ausgangsspannung von einer Startspannung, z. B. Null Volt, bis zu einer Zielspannung, z. B. der Nennspannung des Netzes, erfolgt.

4. Verfahren nach einem der vorhergehenden Ansprüche, **dadurch gekennzeichnet, dass** bei mindestens einer Triggerbedingung die Steuerung beginnt, die Halbleiter zu schalten, um eine quadratische Wellenform der Ausgangsspannung des Umrichters (ST) zu erzeugen.

5. Verfahren nach Anspruch 4, **dadurch gekennzeichnet, dass** die Steuerung auswertet, ob sich der Fehler in der Nähe des Umrichters (ST) befindet und/oder der nächstgelegene Unterbrecher (A, B, C) einen Eingriffsstrom hat, der höher ist als die Strombelastbarkeit des Umrichters (ST), wenn eine oder beide dieser Bedingungen erfüllt sind, beginnt die Steuerung, die Halbleiter zu schalten, um eine quadratische Wellenform der Ausgangsspannung des Umrichters (ST) zu erzeugen.

6. Computerprogramm mit Anweisungen, um die Steuereinheit nach Anspruch 1 zu veranlassen, die Schritte eines Verfahrens nach einem der vorhergehenden Ansprüche auszuführen.

7. Netzbildender Umrichter (ST) mit einer an ein Primärnetz (MV) anzuschließenden Primärseite und einer an ein Sekundärnetz (LV) anzuschließenden Sekundärseite, wobei der Umrichter (ST) Halbleiterschalter und eine Steuereinheit umfasst, die die Halbleiterschalter zum Umwandeln elektrischer Energie vom Primärnetz in das Sekundärnetz und/oder vom Sekundärnetz in das Primärnetz steuert, wobei die Steuereinheit zum Ausführen eines Verfahrens nach einem der Ansprüche 1 bis 5 eingerichtet ist.

8. Umrichter (ST) nach Anspruch 7, **dadurch gekennzeichnet, dass** dem Umrichter (ST) kein Ferroresonanzkreis parallel geschaltet ist.

9. Wandler (ST) nach einem der Ansprüche 7 bis 8, **dadurch gekennzeichnet, dass** die Steuereinheit einen Rechner und/oder eine Logikschaltung zur Ausführung des Verfahrens nach einem der Ansprüche 1 bis 5 umfasst.

10. Umrichter (ST) nach einem der Ansprüche 7 bis 9, **dadurch gekennzeichnet, dass**
a) das Primärnetz (MV) ein Hochspannungsnetz ist und das Sekundärnetz (LV) ein Mittelspannungsnetz ist oder
b) das Primärnetz (MV) ein Mittelspannungsnetz ist und das Sekundärnetz (LV) ein Niederspannungsnetz ist.

## Revendications

1. Procédé de commande d'un convertisseur (ST) formant un réseau, le convertisseur (ST) comprenant des commutateurs à semi-conducteur et une unité de commande qui commande les commutateurs à semi-conducteur, le procédé comprenant au moins les étapes suivantes consistant à :
a) détecter un défaut dans le convertisseur (ST) ou dans le réseau connecté au convertisseur (ST), lequel défaut pouvant mener à un dysfonctionnement du convertisseur (ST),
b) changer un mode de fonctionnement actuel de l'unité de commande en un mode de fonctionnement défaut pour commander les commutateurs à semi-conducteur, qui protège le convertisseur (ST) vis-à-vis du dysfonctionnement et qui maintient en même temps les disjoncteurs de réseau à sélectivité (A, B, C) dans le réseau,
**caractérisé en ce que**, dans le mode de fonctionnement défaut, le convertisseur (ST) bloque, en tant que première réaction, les commutateurs à semi-conducteur de la phase ou des phases impliquées dans le défaut et ensuite, après avoir attendu un court transitoire qui permet de dissiper l'énergie transitoire, causée par le défaut, des commutateurs à semi-conducteur, le convertisseur (ST) applique un gradient de tension pour augmenter graduellement la tension de sortie fournie par les commutateurs à semi-conducteur.

2. Procédé selon la revendication 1, **caractérisé en ce que** le gradient de tension est une rampe linéaire ou une rampe non linéaire.

3. Procédé selon l'une des revendications 1 à 2, **caractérisé en ce que** l'augmentation graduelle de la tension de sortie se fait à partir d'une tension de départ, par exemple zéro Volt, jusqu'à une tension cible, par exemple la tension nominale du réseau.

4. Procédé selon l'une des revendications précédentes, **caractérisé en ce que**, sur au moins une condition de déclenchement, la commande commence à commuter les semi-conducteurs afin de créer une forme d'onde carrée de la tension de sortie du convertisseur (ST).

5. Procédé selon la revendication 4, **caractérisé en ce que** la commande évalue si le défaut est proche du convertisseur (ST) et/ou si le disjoncteur (A, B, C) le plus proche présente un courant d'intervention supérieur au courant permanent admissible du convertisseur (ST), et si l'une ou les deux de ces conditions sont remplies, alors la commande commence à commuter les semi-conducteurs afin de créer une forme d'onde carrée de la tension de sortie du convertisseur (ST).

6. Programme informatique comprenant des instructions pour amener l'unité de commande selon la revendication 1 à exécuter les étapes du procédé selon l'une des revendications précédentes.

7. Convertisseur (ST) formant un réseau ayant un côté primaire à connecter à un réseau primaire (MV) et un côté secondaire à connecter à un réseau secondaire (LV), le convertisseur (ST) comprenant des commutateurs à semi-conducteur et une unité de commande qui commande les commutateurs à semi-conducteur pour convertir l'énergie électrique du réseau primaire au réseau secondaire et/ou du réseau secondaire au réseau primaire, dans lequel l'unité de commande est agencée pour mettre en oeuvre un procédé selon l'une des revendications 1 à 5.

8. Convertisseur (ST) selon la revendication 7, **caractérisé en ce qu'**aucun circuit ferrorésonnant n'est connecté en parallèle au convertisseur (ST).

9. Convertisseur (ST) selon l'une des revendications 7 à 8, **caractérisé en ce que** l'unité de commande comprend un ordinateur et/ou un circuit logique pour mettre en oeuvre le procédé selon l'une des revendications 1 à 5.

10. Convertisseur (ST) selon l'une des revendications 7 à 9, **caractérisé en ce que**
a) le réseau primaire (MV) est un réseau haute tension et le réseau secondaire (LV) est un réseau moyenne tension, ou
b) le réseau primaire (MV) est un réseau moyenne tension et le réseau secondaire (LV) est un réseau basse tension.
